(19) Europäisches Patentamt
European Patent Office
Office européen des brevets

(11) **EP 4 462 740 A1**

(12) **EUROPEAN PATENT APPLICATION**

(43) Date of publication:
**13.11.2024  Bulletin 2024/46**

(51) International Patent Classification (IPC):
***H04L 25/02*** *(2006.01)*

(21) Application number: **24171906.1**

(22) Date of filing: **23.04.2024**

(52) Cooperative Patent Classification (CPC):
**H04L 25/0254; H04L 25/0204; H04L 25/0224; H04L 25/0232**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **26.04.2023  FI 20235466**

(71) Applicant: **Nokia Solutions and Networks Oy
02610 Espoo (FI)**

(72) Inventors:
• **MOHAMMADI, Jafar
Munich (DE)**
• **ZIVKOVIC, Milan
Stuttgart (DE)**

(74) Representative: **Nokia EPO representatives
Nokia Technologies Oy
Karakaari 7
02610 Espoo (FI)**

(54) **MACHINE LEARNING-AIDED CHANNEL ESTIMATION IN WIRELESS COMMUNICATION NETWORK**

(57) A technical solution is provided, which enhances the performance of Machine Learning (ML)-based channel estimation by using two different pilot sequences. More specifically, a first pilot sequence (e.g., a sequence of Demodulation Reference Signals (DMRSs)) is designed to track a change in a wireless communication channel in a frequency domain, while a second pilot sequence (e.g., a sequence of Phase-Tracking RSs (PTRSs)) is designed to track a change in the wireless communication channel in a time domain. By using the first and second pilot sequences thus designed, raw channel estimates in the frequency and time domains, respectively, are obtained on a receiving side. Then, the raw channel estimates are fed to a ML model that is configured to predict a full (time-frequency) channel estimate based thereon. The full channel estimate may be subsequently used in a data decoding algorithm executed on the receiving side.

FIG. 4

EP 4 462 740 A1

**Description**

**TECHNICAL FIELD**

The present disclosure relates generally to the field of wireless communication. In particular, the present disclosure relates to a technique for performing Machine Learning (ML)-aided channel estimation in a wireless communication network.

**BACKGROUND**

Accurate channel estimation as well as precise Channel State Information (CSI) feedback are the key technical prerequisites for meeting the challenges of the upcoming 6th Generation (6G) wireless communications both at physical (PHY) and Medium Access Control (MAC) layers. Moreover, the reliable and efficient detection of transmitted data strongly depends on the accurate representation of a wireless communication channel. Once the wireless communication channel is estimated, the resulting estimates are used for the equalization of transmitted data.

To estimate the wireless communication channel, the cellular standards, such as the 4th Generation (4G) Long-Term Evolution (LTE) and the 5th Generation (5G) New Radio (NR), define dedicated pilot sequences each having a predetermined value and position in time-frequency, known to both a transmitter and a receiver. More specifically, the pilot-based channel estimation required for data detection both in an uplink (UL) and a downlink (DL) (i.e., in a Physical Uplink Shared Channel (PUSCH) and a Physical Downlink Shared Channel (PDSCH), respectively) can be performed by using Demodulation Reference Signals (DMRSs). Furthermore, Sounding Reference Signals (SRSs) and Channel-State Information Reference Signals (CSI-RSs) can be used to estimate corresponding beamforming coefficients, often in combination with the DMRSs, depending on implementation specifics.

The DMRSs are confined to a scheduled bandwidth (i.e., number of Physical Resource Blocks (PRBs)) and a duration (i.e., time slot) used for the PDSCH and the PUSCH. Moreover, to support Multiple-Input Multiple-Output (MIMO) transmission, multiple orthogonal DMRSs have to be allocated, one DMRS for each transmission layer. Additionally, to support high-mobility scenarios to track fast temporal changes in the wireless communication channel, the frequency of the DMRS symbols per layer can further increase (which is implemented as an additional DMRS feature in the 5G standard).

Given the above, there is a need for a technical solution that enables accurate channel estimation in a wireless communication network, especially in massive MIMO scenarios with many layers and antenna configurations where an increase in DMRS signaling overhead becomes very critical and further reduces cellular system capacity. The existing solutions mainly rely on Linear Minimum Mean Squared Error (LMMSE) estimation algorithms which, in practice, result in sub-optimal estimation results and provide significant performance degradation in complex wireless communication channels.

**SUMMARY**

This summary is provided to introduce a selection of concepts in a simplified form that are further described below in the detailed description. This summary is not intended to identify key features of the present disclosure, nor is it intended to be used to limit the scope of the present disclosure.

It is an objective of the present disclosure to provide a technical solution that enables accurate ML-aided channel estimation in a wireless communication network.

The objective above is achieved by the features of the independent claims in the appended claims. Further embodiments and examples are apparent from the dependent claims, the detailed description, and the accompanying drawings.

According to a first aspect, a network entity in a wireless communication network is provided. The network entity comprises at least one processor and at least one memory storing instructions that, when executed by the at least one processor, cause the network entity to perform at least as follows. At first, the network entity receives, from another network entity in the wireless communication network, a first pilot sequence over a wireless communication channel. The first pilot sequence is designed to track a change in the wireless communication channel in a frequency domain. Next or in parallel, the network entity receives, from said another network entity, a second pilot sequence over the wireless communication channel. The second pilot sequence is designed to track a change in the wireless communication channel in a time domain. Further, the network entity uses the first pilot sequence to obtain a first raw channel estimate for the wireless communication channel in the frequency domain and the second pilot sequence to obtain a second raw channel estimate for the wireless communication channel in the time domain. After that, the network entity obtains a full channel estimate for the wireless communication channel in both the frequency domain and the time domain by using an ML model. The ML model is configured to receive the first raw channel estimate and the second raw channel estimate as input data. By using the first and second pilot sequences thus designed, it is possible to perform ML-aided channel estimation more efficiently and accurately. Furthermore, since the ML model is fed with the frequency- and time-domain raw channel estimates, the full channel estimate outputted by the ML model may be considered both frequency- and time-interpolated for a given time slot, which excludes the need for additional time interpolation usually applied to channel estimates. Moreover, the ML-aided channel estimation performed by the network entity according to the first aspect may be especially beneficial in high-speed scenarios (i.e., when said another network entity is represented by a User Equipment moving at a high speed, e.g., more than 120 km/h) and MIMO scenarios due to the possibility of reducing the number of pilot symbols in the first and second pilot sequences, thereby resulting in a larger multiplexing gain and spectral efficiency.

In one example embodiment of the first aspect, the first pilot sequence comprises a sequence of DMRSs, a sequence of SRSs, or a sequence of CSI-RSs, while the second pilot sequence comprises a sequence of Phase-Tracking Reference Signals (PTRSs). Thus, the network entity according to the first aspect may be applicable to the main existing pilot sequences, which may make it more flexible in use (e.g., it may be used not only in the upcoming 6G communication technology, but also in the existing 4G and 5G communication technology). Furthermore, when the first pilot sequence comprises, for example, DMRSs, the use of PTRSs in the second pilot sequence allows one to significantly reduce the number of DMRSs, especially in the high-speed scenarios, thereby significantly improving the multiplexing gain and spectral efficiency of the wireless communication channel.

In one example embodiment of the first aspect, the network entity is caused to obtain the first raw channel estimate and the second raw channel estimate by applying a least squares estimation scheme to the received first pilot sequence and the received second pilot sequence, respectively. By using the first and second raw channel estimates thus obtained, it is possible to properly (in terms of accuracy) predict the full channel estimate.

In one example embodiment of the first aspect, the network entity is caused to obtain the first raw channel estimate as a product of the received first pilot sequence and a Hermitian of the first pilot sequence transmitted by said another network entity and obtain the second raw channel estimate as a product of the received second pilot sequence and a Hermitian of the second pilot sequence transmitted by said another network entity. By using the first and second raw channel estimates thus obtained, it is possible to properly (in terms of accuracy) predict the full channel estimate.

In one example embodiment of the first aspect, the ML model comprises a Convolutional Neural Network (CNN). The CNN may provide the most accurate channel estimation.

According to a second aspect, a method for operating a network entity in a wireless communication network is provided. The method starts with the step of receiving, from another network entity in the wireless communication network, a first pilot sequence over a wireless communication channel. The first pilot sequence is designed to track a change in the wireless communication channel in a frequency domain. Then, the method proceeds to the step of receiving, from said another network entity, a second pilot sequence over the wireless communication channel. The second pilot sequence is designed to track a change in the wireless communication channel in a time domain. Next, the method goes on to the steps of using the first pilot sequence to obtain a first raw channel estimate for the wireless communication channel in the frequency domain and using the second pilot sequence to obtain a second raw channel estimate for the wireless communication channel in the time domain. After that, the method proceeds to the step of obtaining a full channel estimate for the wireless communication channel in both the frequency domain and the time domain by using an ML model. The ML model is configured to receive the first raw channel estimate and the second raw channel estimate as input data. By using the first and second pilot sequences thus designed, it is possible to perform ML-aided channel estimation more efficiently and accurately. Furthermore, since the ML model is fed with the frequency- and time-domain raw channel estimates, the full channel estimate outputted by the ML model may be considered both frequency- and time-interpolated for a given time slot, which excludes the need for additional time interpolation usually applied to channel estimates. Moreover, the ML-aided channel estimation performed in the method according to the second aspect may be especially beneficial in high-speed scenarios (i.e., when said another network entity is represented by a User Equipment moving at a high speed, e.g., more than 120 km/h) and MIMO scenarios due to the possibility of reducing the number of pilot symbols in the first and second pilot sequences, thereby resulting in a larger multiplexing gain and spectral efficiency.

In one example embodiment of the second aspect, the first pilot sequence comprises a sequence of DMRSs, a sequence of SRSs, or a sequence of CSI-RSs, while the second pilot sequence comprises a sequence of PTRSs. Thus, the method according to the second aspect may be applicable to the main existing pilot sequences, which may make it more flexible in use. Furthermore, when the first pilot sequence comprises, for example, DMRSs, the use of PTRSs in the second pilot sequence allows one to significantly reduce the number of DMRSs, especially in the high-speed scenarios, thereby significantly improving the multiplexing gain and spectral efficiency of the wireless communication channel.

In one example embodiment of the second aspect, the first raw channel estimate and the second raw channel estimate are obtained by applying a least squares estimation scheme to the received first pilot sequence and the received second pilot sequence, respectively. By using the first and second raw channel estimates thus obtained, it is possible to properly (in terms of accuracy) predict the full channel estimate.

In one example embodiment of the second aspect, the first raw channel estimate is obtained as a product of the received first pilot sequence and a Hermitian of the first pilot sequence transmitted by the UE or said another network entity, and the second raw channel estimate is obtained as a product of the received second pilot sequence and a Hermitian of the second pilot sequence transmitted by the UE or said another network entity. By using the first and second raw channel estimates thus obtained, it is possible to properly (in terms of accuracy) predict the full channel estimate.

In one example embodiment of the second aspect, the ML model comprises a CNN. The CNN may provide the most accurate channel estimation.

According to a third aspect, a computer program product is provided. The computer program product comprises a computer-readable storage medium that stores a computer code. Being executed by at least one processor, the computer code causes the at least one processor to perform the method according to the second aspect. By using such a computer program product, it is possible to simplify the implementation of the method according to the second aspect in any network entity, like the network entity according to the first aspect.

According to a fourth aspect, a network entity in a wireless communication network is provided. The network entity comprises a means for receiving, from another network entity in the wireless communication network, a first pilot sequence over a wireless communication channel. The first pilot sequence is designed to track a change in the wireless communication channel in a frequency domain. The network entity further comprises a means for receiving, from said another network entity, a second pilot sequence over the wireless communication channel. The second pilot sequence is designed to track a change in the wireless communication channel in a time domain. The network entity further comprises a means for using the first pilot sequence to obtain a first raw channel estimate for the wireless communication channel in the frequency domain and a means for using the second pilot sequence to obtain a second raw channel estimate for the wireless communication channel in the time domain. The network entity further comprises a means for obtaining a full channel estimate for the wireless communication channel in both the frequency domain and the time domain by using an ML model. The ML model is configured to receive the first raw channel estimate and the second raw channel estimate as input data. By using the first and second pilot sequences thus designed, it is possible to perform ML-aided channel estimation more efficiently and accurately. Furthermore, since the ML model is fed with the frequency- and time-domain raw channel estimates, the full channel estimate outputted by the ML model may be considered both frequency- and time-interpolated for a given time slot, which excludes the need for additional time interpolation usually applied to channel estimates. Moreover, the ML-aided channel estimation performed by the network entity according to the fourth aspect may be especially beneficial in high-speed scenarios (i.e., when said another network entity is represented by a User Equipment moving at a high speed, e.g., more than 120 km/h) and MIMO scenarios due to the possibility of reducing the number of pilot symbols in the first and second pilot sequences, thereby resulting in a larger multiplexing gain and spectral efficiency.

Other features and advantages of the present disclosure will be apparent upon reading the following detailed description and reviewing the accompanying drawings.


## BRIEF DESCRIPTION OF THE DRAWINGS

The present disclosure is explained below with reference to the accompanying drawings in which:

FIG. 1 shows a block diagram of a network entity in a wireless communication network in accordance with one example embodiment;

FIG. 2 shows a flowchart of a method for operating the network entity of FIG. 1 in accordance with one example embodiment;

FIG. 3 shows a flowchart of a training algorithm for a Neural Network (NN) used as a ML model in the method of FIG. 2;

FIG. 4 shows a block diagram of a wireless communication system in which the network entity of FIG. 1 is implemented as part of a Radio Access Network (RAN) node in accordance with one example embodiment;

FIGs. 5A-5D show different Physical Resource Block (PRB) structures that can be used in the method of FIG. 2, namely: the PRB structure comprising one Demodulation Reference Signal (DMRS) symbol and one Phase-Tracking Reference Signal (PTRS) symbol per subcarrier (FIG. 5A), the PRB structure comprising three DMRS symbols and three PTRS symbols per subcarrier (FIG. 5B), the PRB structure comprising two DMRS symbols and two PTRS symbols on every second subcarrier (FIG. 5C), and the PRB structure comprising three DMRS symbols and three PTRS symbols on every forth subcarrier (FIG. 5D); and

FIG. 6 shows a Normalized Mean Square Error (NMSE) versus a Signal-to-Noise Ratio (SNR), as obtained for the following two high-speed (i.e., 120 km/h) scenarios: the conventional scenario in which only DMRSs are used, and the PTRS scenario in which the combination of DMRSs and PTRSs is used.

## DETAILED DESCRIPTION

Various embodiments of the present disclosure are further described in more detail with reference to the accompanying drawings. However, the present disclosure can be embodied in many other forms and should not be construed as limited to any certain structure or function discussed in the following description. In contrast, these embodiments are provided to make the description of the present disclosure detailed and complete.

According to the detailed description, it will be apparent to the ones skilled in the art that the scope of the present disclosure encompasses any embodiment thereof, which is disclosed herein, irrespective of whether this embodiment is implemented independently or in concert with any other embodiment of the present disclosure. For example, the apparatus and method disclosed herein can be implemented in practice by using any numbers of the embodiments provided herein. Furthermore, it should be understood that any embodiment of the present disclosure can be implemented using one or more of the elements presented in the appended claims.

Unless otherwise stated, any embodiment recited herein as "example embodiment" should not be construed as preferable or having an advantage over other embodiments.

Although the numerative terminology, such as "first", "second", etc., may be used herein to describe various embodiments, elements or features, these embodiments, elements or features should not be limited by this numerative terminology. This numerative terminology is used herein only to distinguish one embodiment, element or feature from another embodiment, element or feature. Thus, a first raw channel estimate discussed below could be called a second raw channel estimate, and vice versa, without departing from the teachings of the present disclosure.

According to the example embodiments disclosed herein, a User Equipment (UE) may refer to an electronic computing device that is configured to perform wireless communications. The UE may be implemented as a mobile station, a mobile terminal, a mobile subscriber unit, a mobile phone, a cellular phone, a smart phone, a cordless phone, a personal digital assistant (PDA), a wireless communication device, a desktop computer, a laptop computer, a tablet computer, a gaming device, a netbook, a smartbook, an ultrabook, a medical mobile device or equipment, a biometric sensor, a wearable device (e.g., a smart watch, smart glasses, a smart wrist band, etc.), an entertainment device (e.g., an audio player, a video player, etc.), a vehicular component or sensor (e.g., a driver-assistance system), a smart meter/sensor, an unmanned vehicle (e.g., an industrial robot, a quadcopter, etc.) and its component (e.g., a self-driving car computer), industrial manufacturing equipment, a global positioning system (GPS) device, an Internet-of-Things (IoT) device, an Industrial IoT (IIoT) device, a machine-type communication (MTC) device, a group of Massive IoT (MIoT) or Massive MTC (mMTC) devices/sensors, or any other suitable mobile device configured to support wireless communications. In some embodiments, the UE may refer to at least two collocated and inter-connected UEs thus defined.

As used in the example embodiments disclosed herein, a Radio Access Network (RAN) node may refer to a fixed point of communication/communication node for a UE in a particular wireless communication network. More specifically, the RAN node may be used to connect the UE to a Data Network (DN) through a Core Network (CN) and may be referred to as a base transceiver station (BTS) in terms of the 2G communication technology, a NodeB in terms of the 3G communication technology, an evolved NodeB (eNodeB or eNB) in terms of the 4G communication technology, and a gNB in terms of the 5G New Radio (NR) communication technology. The RAN node may serve different cells, such as a macrocell, a microcell, a picocell, a femtocell, and/or other types of cells. The macrocell may cover a relatively large geographic area (e.g., at least several kilometers in radius). The microcell may cover a geographic area less than two kilometers in radius, for example. The picocell may cover a relatively small geographic area, such, for example, as offices, shopping malls, train stations, stock exchanges, etc. The femtocell may cover an even smaller geographic area (e.g., a home). Correspondingly, the RAN node serving the macrocell may be referred to as a macro node, the RAN node serving the microcell may be referred to as a micro node, and so on.

According to the example embodiments disclosed herein, a wireless communication network, in which UEs and RAN nodes communicate with each other, may refer to a cellular or mobile network, a Wireless Local Area Network (WLAN), a Wireless Personal Area Networks (WPAN), a Wireless Wide Area Network (WWAN), a satellite communication (SATCOM) system, or any other type of wireless communication networks. Each of these types of wireless communication networks supports wireless communications according to one or more communication protocol standards. For example, the cellular network may operate according to the Global System for Mobile Communications (GSM) standard, the Code-Division Multiple Access (CDMA) standard, the Wide-Band Code-Division Multiple Access (WCDM) standard, the Time-Division Multiple Access (TDMA) standard, or any other communication protocol standard, the WLAN may operate according to one or more versions of the IEEE 802.11 standards, the WPAN may operate according to the Infrared Data Association (IrDA), Wireless USB, Bluetooth, or ZigBee standard, and the WWAN may operate according to the Worldwide Interoperability for Microwave Access (WiMAX) standard.

As used in the example embodiments disclosed herein, a wireless communication channel may refer to any downlink (DL) or uplink (UL) channel which is used in conventional wireless communications systems. More specifically, the wireless communication channel may be considered as a DL channel if the matter concerns wireless communications from a higher-level network entity to a lower-level network entity (e.g., from a BTS to a UE, or the like). At the same time, the wireless communication channel may be considered as an UL channel if the matter concerns wireless communications from a lower-level network entity to a higher-level network entity (e.g., from a UE to a BTS, or the like). However, the present disclosure is not limited to the usage of the DL and UL channels only, and there may be embodiments in which the wireless communication channel is used to establish wireless communications between network entities at the same level (e.g., between two UEs, or between two RAN nodes), for which reason the wireless communication channel may be considered as a sidelink channel.

The present disclosure refers to a technical solution that enhances the performance of Machine Learning (ML)-based channel estimation by using two different pilot sequences. More specifically, a first pilot sequence is designed to track a change in a wireless communication channel in a frequency domain, while a second pilot sequence is designed to track a change in the wireless communication channel in a time domain. For example, the first pilot sequence is one of a sequence of Demodulation Reference Signals (DMRSs), a sequence of Sounding Reference Signals (SRSs), and a sequence of Channel-State Information Reference Signals (CSI-RSs), while the second pilot sequence is represented by a sequence of Phase-Tracking Reference Signals (PTRSs). By using the first and second pilot sequences thus designed, raw channel estimates in the frequency and time domains, respectively, are obtained on a receiving side (e.g., at a UE or a RAN node). Then, the raw channel estimates are fed to a ML model (e.g., a Convolutional Neural Network (CNN)) that is configured to predict a full (accurate) time-frequency channel estimate based thereon. The full channel estimate may be subsequently used in a data decoding algorithm (which involves equalization, demapping, etc.) executed on the receiving side.

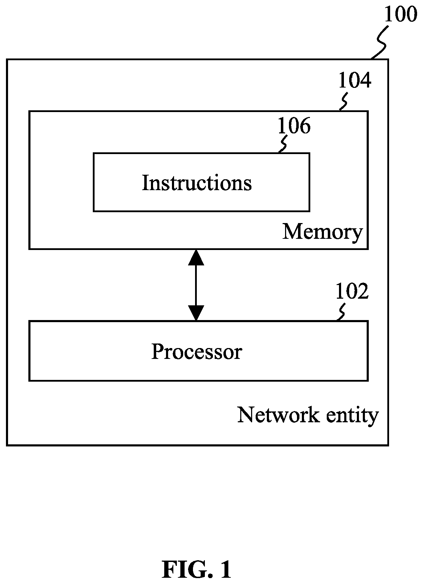

FIG. 1 shows a block diagram of a network entity 100 in a wireless communication network in accordance with one example embodiment. The network entity 100 may be, but not limited to, a UE or a RAN node or may be part of a UE or a RAN node in the wireless communication network. As shown in FIG. 1, the network entity 100 comprises a processor 102 and a memory 104. The memory 104 stores processor-executable instructions 106 which, when executed by the processor 102, cause the processor 102 to perform the aspects of the present disclosure, as will be described below in more detail. It should be noted that the number, arrangement, and interconnection of the constructive elements constituting the network entity 100, which are shown in FIG. 1, are not intended to be any limitation of the present disclosure, but merely used to provide a general idea of how the constructive elements may be implemented within the network entity 100. For example, the processor 102 may be replaced with several processors, as well as the memory 104 may be replaced with several removable and/or fixed storage devices, depending on particular applications. Furthermore, in some embodiments, the processor 102 may perform different operations required to perform data reception and transmission, such, for example, as signal modulation/demodulation, encoding/decoding, etc.

The processor 102 may be implemented as a CPU, general-purpose processor, single-purpose processor, microcontroller, microprocessor, application specific integrated circuit (ASIC), field programmable gate array (FPGA), digital signal processor (DSP), complex programmable logic device, etc. It should be also noted that the processor 102 may be implemented as any combination of one or more of the aforesaid. As an example, the processor 102 may be a combination of two or more microprocessors.

The memory 104 may be implemented as a classical nonvolatile or volatile memory used in the modern electronic computing machines. As an example, the nonvolatile memory may include Read-Only Memory (ROM), ferroelectric Random-Access Memory (RAM), Programmable ROM (PROM), Electrically Erasable PROM (EEPROM), solid state drive (SSD), flash memory, magnetic disk storage (such as hard drives and magnetic tapes), optical disc storage (such as CD, DVD and Blu-ray discs), etc. As for the volatile memory, examples thereof include Dynamic RAM, Synchronous DRAM (SDRAM), Double Data Rate SDRAM (DDR SDRAM), Static RAM, etc.

The processor-executable instructions 106 stored in the memory 104 may be configured as a computer-executable program code which causes the processor 102 to perform the aspects of the present disclosure. The computer-executable program code for carrying out operations or steps for the aspects of the present disclosure may be written in any combination of one or more programming languages, such as Java, C++, or the like. In some examples, the computer-executable program code may be in the form of a high-level language or in a pre-compiled form and be generated by an interpreter (also pre-stored in the memory 104) on the fly.

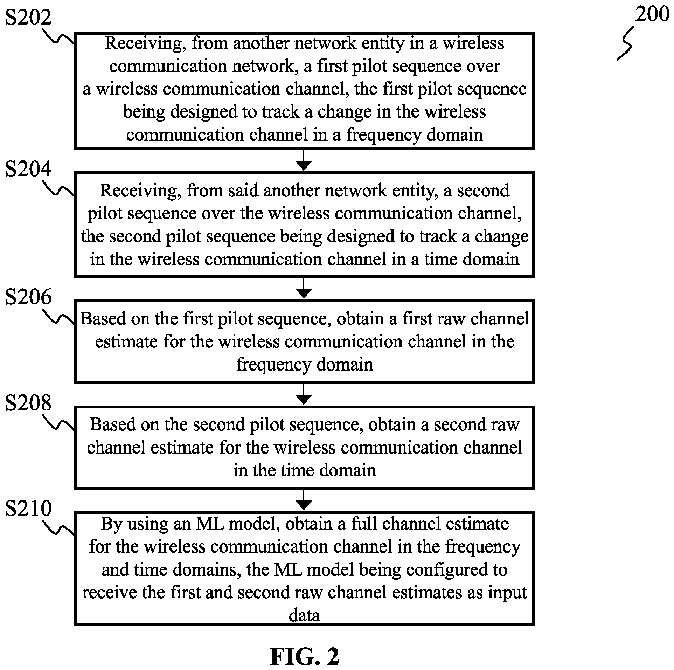

FIG. 2 shows a flowchart of a method 200 for operating the network entity 100 in accordance with one example embodiment.

The method 200 starts with a step S202, in which the processor 102 receives a first pilot sequence over a wireless communication channel. The first pilot sequence is intended to be transmitted to the network entity 100 from another network entity in the wireless communication network. For example, the network entity 100 may be a UE or RAN node (e.g., gNB) that receives the first pilot sequence from a different network entity, such as another UE or another RAN node. It should be noted that the term "pilot sequence" is used herein in its ordinary meaning commonly accepted in this technical field and may refer to a set of known pilot signals or symbols successively transmitted from a transmitter (i.e., said another network entity) to a receiver (i.e., the network entity 100) at known time intervals or slots. By using the pilot sequence, the receiver can perform a set of critical functions, including but not limited to, the acquisition and tracking of timing and frequency synchronization, the estimation and tracking of a desired wireless communication channel for subsequent demodulation and decoding of information data, etc. Turning back to the first pilot sequence received by the processor 102, it is designed to track a change in the wireless communication channel in a frequency domain. For example, the change in the frequency domain may occur in case of multipath propagation, i.e., when different replicas of a transmitted signal arrive with different phases, at different times, and from different directions. Preferably, the first pilot sequence is represented by a sequence of DMRSs, a sequence of SRSs, or a sequence of CSI-RSs.

After the step S202, the method proceeds to a step S204, in which the processor 102 receives a second pilot sequence over the wireless communication channel. Again, the second pilot sequence is intended to be transmitted to the network entity 100 from said another network entity, as defined above. The second pilot sequence is designed to track a change in the wireless communication channel in a time domain. Similarly, the change in the time domain may be again caused by the above-mentioned multipath propagation and UE movements (especially at high speeds). Preferably, the second pilot sequence is represented by a sequence of PTRSs. It should be also noted that the steps S202 and S204 may be performed in parallel, if required and/or depending on the performance of the network entity 100 (in particular, the processor 102).

Subsequently, the method 200 goes on to a step S206, in which the processor 102 uses the first pilot sequence to obtain a first raw channel estimate for the wireless communication channel in the frequency domain. Next, the method 200 proceeds to a step S208, in which the processor 102 uses the second pilot sequence to obtain a second raw channel estimate for the wireless communication channel in the time domain. Again, the steps S206 and S208 may be performed in parallel, if required and/or depending on the performance of the network entity 100 (in particular, the processor 102). In one embodiment, the processor 102 may obtain the first and second raw channel estimates by applying a least squares estimation scheme to the received first and second pilot sequences, respectively. In alternative (preferred) embodiment, the processor 102 may obtain the first raw channel estimate as a product of the received first pilot sequence and a Hermitian of the first pilot sequence transmitted by said another network entity and obtain the second raw channel estimate as a product of the received second pilot sequence and a Hermitian of the second pilot sequence transmitted by said another network entity.

When the first and second raw channel estimates are obtained, the method 200 proceeds to a step S210, in which the processor 102 obtains a full channel estimate for the wireless communication channel in both the frequency domain and the time domain by using an ML model. The ML model is configured to receive the first and second raw channel estimates as input data and outputs the full channel estimate based thereon. In a preferred embodiment, the ML model is represented by a Neural Network (NN), such as a Convolutional NN (CNN). One other suitable example of the ML model includes a regression model. A training dataset for the ML model may be composed of past raw channel estimates in the frequency and time domains and associated prediction results (i.e., past full channel estimates).

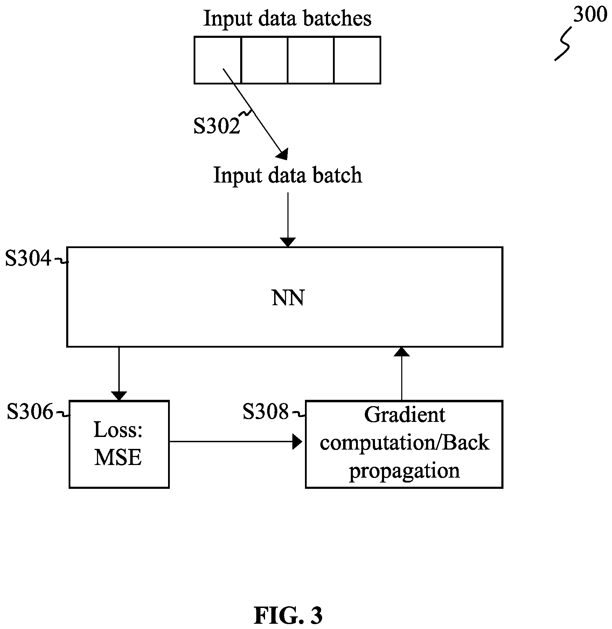

FIG. 3 shows a flowchart of a training algorithm 300 for a NN used as the ML model in the method 200. The NN may be of any type (e.g., a CNN, a Residual NN (ResNet), etc.). The algorithm 300 starts with a step S302, in which the processor 102 takes a first input data batch from a set of input data batches (i.e., a training dataset). Each input data batch comprises one past raw channel estimate in the frequency domain and one past raw channel estimate in the time domain, as well as a corresponding (real) full channel estimate in the time and frequency domains. The set of input data batches may be related either to the same wireless communication channel as the one over which the first and second pilot sequences are received, or to a similar (in channel characteristics) wireless communication channel previously used for pilot-based channel estimation. After the step S302, the algorithm 300 goes on to a step S304, in which the input data batch is fed by the processor 102 into the NN to obtain a predicted full channel estimate in the time and frequency domains. Then, the algorithm 300 proceeds to a step S306, in which the processor 102 calculates a value of a loss function based on the real and predicted full channel estimates. For example, the loss function may be a Mean Squared Error (MSE) function. After that, the algorithm 300 goes on to a step S308, in which the processor 102 trains the NN by using, for example, back propagation and/or NN gradient computation (e.g., gradient descent).

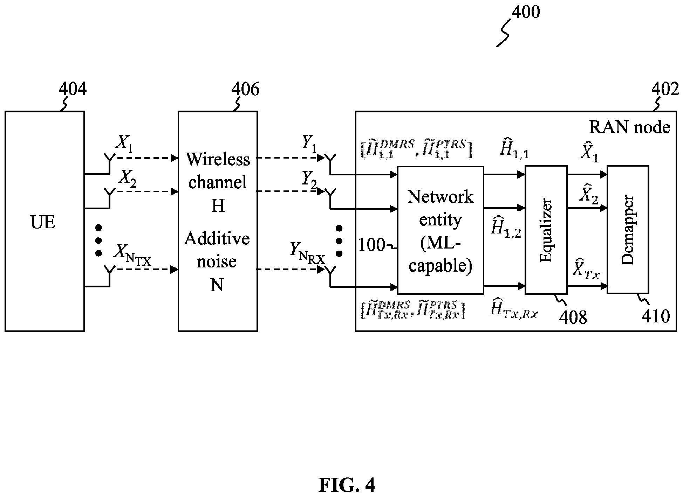

FIG. 4 shows a block diagram of a wireless communication system 400 in which the network entity 100 is implemented as part of a RAN node 402 in accordance with one example embodiment. The system 400 comprises the RAN node 402 and a UE 404 which communicate with each other via a noisy wireless communication channel 406. More specifically, the system 400 is an uplink (UL) Single-User Multiple Input Multiple Output (SU-MIMO) system, where the RAN node 402 equipped with $N_{RX}$ antennas receives a data signal $X$ transmitted from $N_{TX}$ antennas of the UE 404. For this reason, the wireless communication channel 406 is an UL channel, such as a PUSCH. It should be apparent to those skilled in the art that the SU-MIMO system can be extended to a Multiple-User (MU) MIMO (MU-MIMO) system by letting the $N_{TX}$ antennas be distributed among different users.

The transmitted signal $X$ is impaired by the noisy wireless communication channel 406 characterized by a channel matrix H and an additive noise N, such that a received signal $Y$ has to be further processed to correctly decode the data carried thereon. The goal of channel estimation is to provide a channel estimate $\hat{H}$ to an equalizer 408 which produces a transmitted signal estimate $\hat{X}$ to be further demapped by a demapper 410 and, finally, decoded by a decoder (not shown in FIG. 4).

In the RAN node 402 equipped with the $N_{RX}$ antennas, after a Fast Fourier Transform (FFT) operation, the frequency domain received signal Y occupying F subcarriers on a single OFDM symbol, $Y \in \mathbb{C}^{N_F \times N_{Rx}}$ is given as

$$Y = \mathrm{H}X + \mathrm{N},$$

where $X \in \mathbb{C}^{N_F \times N_{Tx}}$ is the transmitted signal, $H \in \mathbb{C}^{N_F \times N_{Rx} \times N_{Tx}}$ is the channel matrix and $N \in \mathbb{C}^{N_F \times N_{Rx}}$ is the additive Gaussian noise. The channel matrix H between each antenna/user $t \in \{1, ...,N_{TX}\}$ and each RX antenna $r \in \{1, ...,N_{Rx}\}$, can be written as $[\hat{H}]_{r,t}$. The channel estimation is reduced to the calculation of the channel estimate $\hat{H}$ necessary for the equalization of the received signal $Y$.

In the system 400, it is assumed that the first pilot sequence is a sequence of DMRSs and the second pilot sequence is a sequence of PTRSs, and the DMRS and PTRS pilot sequences are both transmitted from the UE 404 to the RAN node 402. Given this, the network entity 100 is assumed to perform the method 200 in the RAN node 402 by using a NN (e.g., CNN) as follows. At first, the processor 102 calculates a raw channel estimate for each of the DMRS and PTRS pilot sequences, denoted as $\tilde{H}_{DMRS}$ and $\tilde{H}_{PTRS}$, respectively, as the product of the received pilot sequence and the Hermitian of the transmitted pilot sequence for a given pilot structure, namely:

$$\tilde{H}_{DMRS} = X_{DMRS}^{H} Y_{DMRS},$$

and

$$\tilde{H}_{DMRS} = X_{PTRS}^{H} Y_{PTRS},$$

where $Y_{DMRS/PTRS}$ is the received DMRS/PTRS pilot sequence, $X_{DMRS/PTRS}$ is the transmitted DMRS/PTRS pilot sequence, and the subscript $H$ denotes the Hermitian conjugate.

Then, the processor 102 feeds the raw channel estimates $\tilde{H}_{DMRS}$ and $\tilde{H}_{PTRS}$ into the NN which utilizes the frequency and time characteristics of $\tilde{H}_{DMRS}$ and $\tilde{H}_{PTRS}$, respectively, to produce the accurate full channel estimate, i.e., $\hat{H} = NN(\tilde{H}_{DMRS}, \tilde{H}_{PTRS})$.

The choice of the combination of the DMRS and PTRS pilot sequences can be theoretically explained as follows. While the raw estimate, $\tilde{H}_{DMRS}$, can track channel changes in the frequency domain, the raw estimate $\tilde{H}_{PTRS}$ can be used to additionally track temporal channel changes. The frequency correlation can be learned by leveraging $\tilde{H}_{DMRS}$ inputs. However, in high-speed scenarios, there is a need for multiple DMRS symbols to track the channel changes in the time domain of the wireless communication channel within a given slot. This reduces the system capacity. To prevent this, the $\tilde{H}_{PTRS}$ inputs can be used to track the temporal channel changes, thus reducing the need for additional DMRS symbol per transmission layer in the high-mobility scenarios.

Thus, the ML-aided channel estimation is based on specially designed DMRS pilots $X_{DMRS}$, given as a random sequence initialized by some system parameters (e.g., a Cell ID, a frame and slot number, a Radio Network Temporary Identifier (RNTI) user identifier, etc.). The number of DMRS symbols in a slot is reconfigurable by Radio Resource Management (RRM) (up to 4).

Because the PTRSs are transmitted in the system 400 only in Physical Resource Blocks (PRBs) used for the PUSCH, the idea is to use PTRS pilots, denoted as $X_{PTRS}$, to enhance DMRS-based channel estimation by leveraging the time domain location of the PTRS pilots.

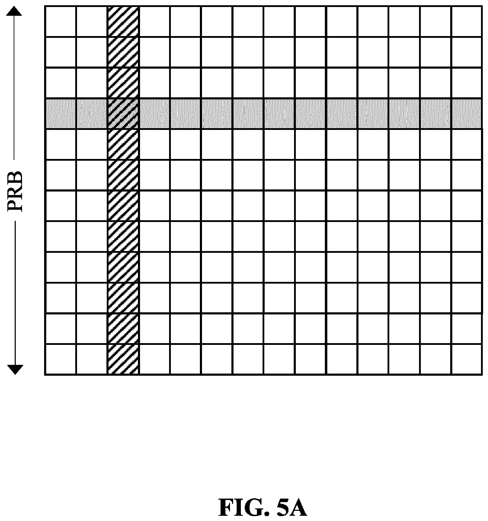

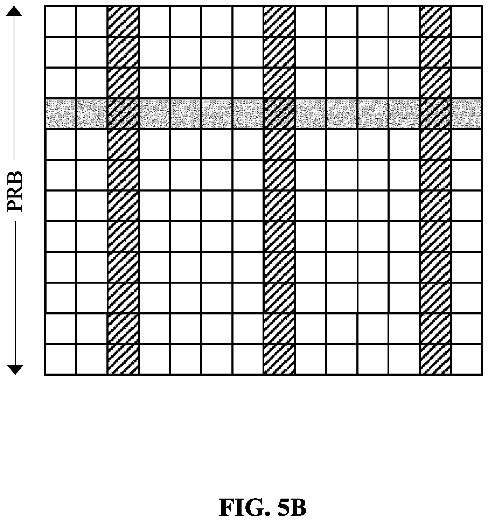

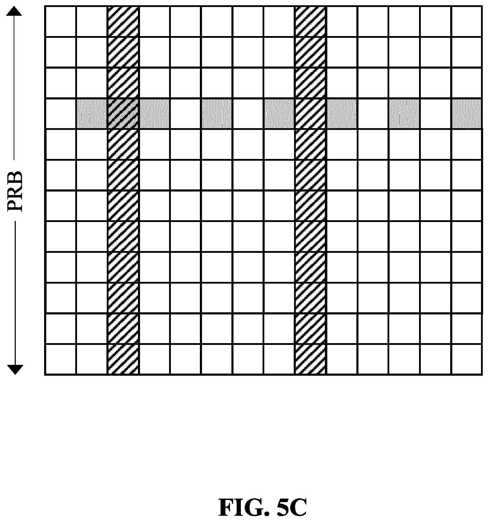

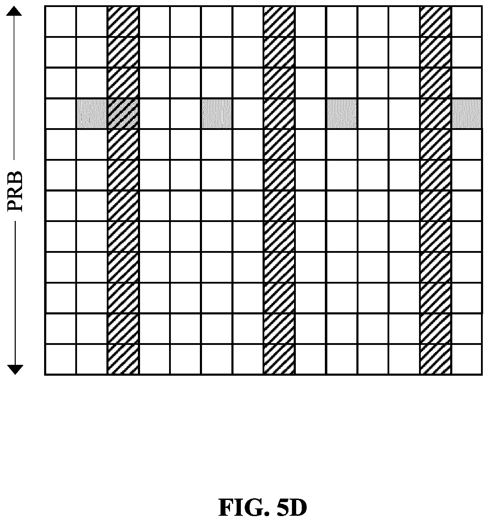

FIGs. 5A-5D show different PRB structures that can be used in the method of FIG. 2. More specifically, FIG. 5A shows a PRB structure comprising one DMRS symbol and one PTRS symbol per subcarrier, FIG. 5B shows a PRB structure comprising three DMRS symbols and three PTRS symbols per subcarrier, FIG. 5C shows a PRB structure comprising two DMRS symbols and two PTRS symbols on every second subcarrier, and FIG. 5D shows a PRB structure comprising three DMRS symbols and three PTRS symbols on every forth subcarrier.

*Simulation results*

To demonstrate the benefits of the method 200 relying on the specific combination of DMRSs and PTRSs, it was compared to the conventional method in which only DMRSs are used. Both methods were applied for a high-speed scenario with a UE moving at 120 km/h (e.g., a user having a mobile phone is inside a high-speed train). Furthermore, in both methods, 5GMAX data were produced with Cluster Delay Line (CLD)-B and CDL-D channel models. In the simulated signaling model, the PRB structure shown in FIG. 5A was used, and 36 PRBs of DMRS pilots repeated every 10 Transmission Time Interval (TTI) with PTRSs taking up only 1 PRB and repeated every TTI. In the conventional method, a specialized trained NN for DMRS-based channel estimation was used. As for the method 200, it was based on a NN trained in accordance with the algorithm 300 by using the training parameters shown in Table 1 below.

*Table 1: Training details*

| Input | Label | Learning rate | Weight / Bias initialization | Optimizer | Batch/ Epochs |
|---|---|---|---|---|---|
| DMRS (at time $t-1$) PT-RS (t, t+1...t+10) | DMRS (clean at time $t+10$) | 0.0001 | Glorot_uniform/ Zeros | ADAM (1e-3. 1e-6) | (128-32)/200 |

More specifically, the training of the NN used in the method 200 was performed with adaptive batch-sizes. For the first 10 epochs, the batch size of 32 was used, then the batch size of 64 was used from the 10th epoch to the 50th epoch, and finally the batch size of 128 was used for the last 150 epochs. The reason for this choice of the variable epochs was that at the beginning of the training since the initialization of weights is the most important factor, which is random, one should not spend too much power on making NN gradients more accurate by having larger batch sizes. Noisier NN gradients might actually help explore more. However, in the final parts, it is better to use a larger batch size to have less noisy NN gradients. The Adam optimizer was also used, and the training itself was performed in Tensorflow.

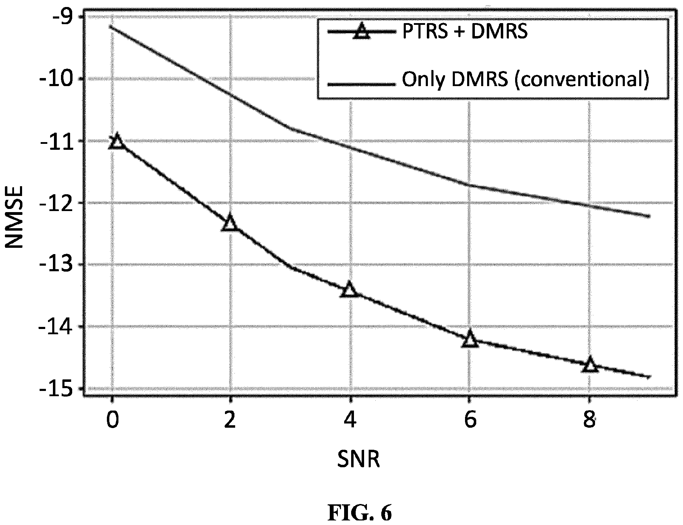

FIG. 6 shows a Normalized Mean Square Error (NMSE) versus a Signal-to-Noise Ratio (SNR), as obtained for the above-described two high-speed (i.e., 120 km/h) scenarios: the conventional scenario in which only DMRSs are used, and the PTRS+DMRS scenario in which the combination of DMRSs and PTRSs is used. As can be seen, the method 200 (i.e., the PTRS+DMRS scenario) provides a large performance gain (see the difference between the curves) at high speeds due to large variations in the wireless communication channel. This is because the PTRS pilot sequence provides significant knowledge on how the channel is evolving in the time domain. It should be noted that the performance gain for speeds lower than 120 km/h is not as significant as the one depicted in FIG. 6.

It should be noted that each step or operation of the method 200 and the algorithm 300, or any combinations of the steps or operations, can be implemented by various means, such as hardware, firmware, and/or software. As an example, one or more of the steps or operations described above can be embodied by processor executable instructions, data structures, program modules, and other suitable data representations. Furthermore, the processor-executable instructions which embody the steps or operations described above can be stored on a corresponding data carrier and executed by the processor 102. This data carrier can be implemented as any computer-readable storage medium configured to be readable by said at least one processor to execute the processor executable instructions. Such computer-readable storage media can include both volatile and nonvolatile media, removable and non-removable media. By way of example, and not limitation, the computer-readable media comprise media implemented in any method or technology suitable for storing information. In more detail, the practical examples of the computer-readable media include, but are not limited to information-delivery media, RAM, ROM, EEPROM, flash memory or other memory technology, CD-ROM, digital versatile discs (DVD), holographic media or other optical disc storage, magnetic tape, magnetic cassettes, magnetic disk storage, and other magnetic storage devices.

Although the example embodiments of the present disclosure are described herein, it should be noted that any various changes and modifications could be made in the embodiments of the present disclosure, without departing from the scope of legal protection which is defined by the appended claims. In the appended claims, the word "comprising" does not exclude other elements or operations, and the indefinite article "a" or "an" does not exclude a plurality. The mere fact that certain measures are recited in mutually different dependent claims does not indicate that a combination of these measures cannot be used to advantage.

**Claims**

1. A network entity for a wireless communication network, comprising:

   at least one processor; and
   at least one memory storing instructions that, when executed by the at least one processor, cause the network entity at least to:

   receive, from another network entity in the wireless communication network, a first pilot sequence over a wireless communication channel, the first pilot sequence being designed to track a change in the wireless communication channel in a frequency domain;
   receive, from said another network entity, a second pilot sequence over the wireless communication channel, the second pilot sequence being designed to track a change in the wireless communication channel in a time domain;
   based on the first pilot sequence, obtain a first raw channel estimate for the wireless communication channel in the frequency domain;
   based on the second pilot sequence, obtain a second raw channel estimate for the wireless communication channel in the time domain; and
   by using a Machine Learning (ML) model, obtain a full channel estimate for the wireless communication channel in both the frequency domain and the time domain, the ML model being configured to receive the first raw channel estimate and the second raw channel estimate as input data.

2. The network entity of claim 1, wherein the first pilot sequence comprises a sequence of Demodulation Reference Signals (DMRSs), a sequence of Sounding Reference Symbols (SRSs), or a sequence of Channel-State Information Reference Signals (CSI-RSs), and wherein the second pilot sequence comprises a sequence of Phase-Tracking Reference Signals (PTRSs).

3. The network entity of claim 1 or 2, wherein the network entity is caused to obtain the first raw channel estimate and the second raw channel estimate by applying a least squares estimation scheme to the received first pilot sequence and the received second pilot sequence, respectively.

4. The network entity of claim 1 or 2, wherein the network entity is caused to:

   obtain the first raw channel estimate as a product of the received first pilot sequence and a Hermitian of the first pilot sequence transmitted by said another network entity; and
   obtain the second raw channel estimate as a product of the received second pilot sequence and a Hermitian of the second pilot sequence transmitted by said another network entity.

5. The network entity of any one of claims 1 to 4, wherein the ML model comprises a Convolutional Neural Network (CNN).

6. A method for operating a network entity in a wireless communication network, comprising:

   receiving, from another network entity in the wireless communication network, a first pilot sequence over a wireless communication channel, the first pilot sequence being designed to track a change in the wireless communication channel in a frequency domain;
   receiving, from said another network entity, a second pilot sequence over the wireless communication channel, the second pilot sequence being designed to track a change in the wireless communication channel in a time domain;
   based on the first pilot sequence, obtaining a first raw channel estimate for the wireless communication channel in the frequency domain;
   based on the second pilot sequence, obtaining a second raw channel estimate for the wireless communication channel in the time domain; and
   by using a Machine Learning (ML) model, obtaining a full channel estimate for the wireless communication channel in both the frequency domain and the time domain, the ML model being configured to receive the first raw channel estimate and the second raw channel estimate as input data.

7. The method of claim 6, wherein the first pilot sequence comprises a sequence of Demodulation Reference Signals (DMRSs), a sequence of Sounding Reference Symbols (SRSs), or a sequence of Channel-State Information Reference Signals (CSI-RSs), and wherein the second pilot sequence comprises a sequence of Phase-Tracking Reference Signals (PTRSs).

8.  The method of claim 6 or 7, wherein the first raw channel estimate and the second raw channel estimate are obtained by applying a least squares estimation scheme to the received first pilot sequence and the received second pilot sequence, respectively.

9.  The method of claim 6 or 7, wherein the first raw channel estimate is obtained as a product of the received first pilot sequence and a Hermitian of the first pilot sequence transmitted by said another network entity, and the second raw channel estimate is obtained as a product of the received second pilot sequence and a Hermitian of the second pilot sequence transmitted by said another network entity.

10. The method of any one of claims 6 to 9, wherein the ML model comprises a Convolutional Neural Network (CNN).

11. A computer program product comprising a computer-readable storage medium, wherein the computer-readable storage medium stores a computer code which, when executed by at least one processor, causes the at least one processor to perform the method according to any one of claims 6 to 10.

**FIG. 1**

S202

200

Receiving, from another network entity in a wireless communication network, a first pilot sequence over a wireless communication channel, the first pilot sequence being designed to track a change in the wireless communication channel in a frequency domain

S204

Receiving, from said another network entity, a second pilot sequence over the wireless communication channel, the second pilot sequence being designed to track a change in the wireless communication channel in a time domain

S206

Based on the first pilot sequence, obtain a first raw channel estimate for the wireless communication channel in the frequency domain

S208

Based on the second pilot sequence, obtain a second raw channel estimate for the wireless communication channel in the time domain

S210

By using an ML model, obtain a full channel estimate for the wireless communication channel in the frequency and time domains, the ML model being configured to receive the first and second raw channel estimates as input data

**FIG. 2**

Input data batches

300

S302

Input data batch

S304 — NN

S306 — Loss: MSE

S308 — Gradient computation/Back propagation

**FIG. 3**

$$400$$

FIG. 4

**FIG. 5A**

**FIG. 5B**

**FIG. 5C**

**FIG. 5D**

**FIG. 6**

Europäisches
Patentamt

European
Patent Office

Office européen
des brevets

# EUROPEAN SEARCH REPORT

**Application Number**

EP 24 17 1906

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2022/205016 A1 (GUANGDONG OPPO MOBILE TELECOMMUNICATIONS CORP LTD [CN]) 6 October 2022 (2022-10-06) * the whole document * & US 2024/022455 A1 (TIAN WENQIANG [CN] ET AL) 18 January 2024 (2024-01-18) * paragraphs [0038], [0042], [0048], [0120], [0126] * * figures 1B, 1D, 5A, 5I * | 1-11 | INV. H04L25/02 |
| X | CHEN WEN CW@STU CSUST EDU CN ET AL: "DecNet-CNN Framework for Channel Estimation", THE INTERNATIONAL SYMPOSIUM ON MEMORY SYSTEMS, ACMPUB27, NEW YORK, NY, USA, 28 May 2021 (2021-05-28), pages 1-5, XP058849459, DOI: 10.1145/3469213.3470305 ISBN: 978-1-4503-9709-4 * Section 1, Section 2.1, Section 3 * * figures 1, 2a * | 1-11 | |
| X | SAIKRISHNA PEDAMALLI ET AL: "Deep Learning Based Channel Estimation with Flexible Delay and Doppler Networks for 5G NR", 2021 IEEE WIRELESS COMMUNICATIONS AND NETWORKING CONFERENCE (WCNC), IEEE, 29 March 2021 (2021-03-29), pages 1-6, XP033909733, DOI: 10.1109/WCNC49053.2021.9417313 [retrieved on 2021-04-27] * Title; Section II; Section II.A-C * * figure 1 * | 1-11 | **TECHNICAL FIELDS SEARCHED (IPC)** H04L |

The present search report has been drawn up for all claims

| Place of search | Date of completion of the search | Examiner |
|---|---|---|
| Munich | 4 October 2024 | Franz, Stefan |

EPO FORM 1503 03.82 (P04C01)

## ANNEX TO THE EUROPEAN SEARCH REPORT
## ON EUROPEAN PATENT APPLICATION NO.

EP 24 17 1906

This annex lists the patent family members relating to the patent documents cited in the above-mentioned European search report.
The members are as contained in the European Patent Office EDP file on
The European Patent Office is in no way liable for these particulars which are merely given for the purpose of information.

04-10-2024

| Patent document cited in search report | Publication date | Patent family member(s) | Publication date |
|---|---|---|---|
| WO 2022205016 A1 | 06-10-2022 | CN 117083839 A<br>EP 4319070 A1<br>US 2024022455 A1<br>WO 2022205016 A1 | 17-11-2023<br>07-02-2024<br>18-01-2024<br>06-10-2022 |

EPO FORM P0459

For more details about this annex : see Official Journal of the European Patent Office, No. 12/82